# EUROPEAN PATENT SPECIFICATION

(11) **EP 3 130 621 B1**
(45) Date of publication and mention of the grant of the patent: **10.08.2022**
(21) Application number: 14846775.6
(22) Date of filing: 19.12.2014
(51) Int. Cl.: C08G 18/76, C08G 18/48, C08G 18/10, C09J 175/00

(54) **FAST CURING ADHESIVE COMPOSITION**
SCHNELLHÄRTENDE HAFTZUSAMMENSETZUNG
COMPOSITION ADHÉSIVE À DURCISSEMENT RAPIDE

(30) Priority: 09.04.2014 MX 2014004304
(43) Date of publication of application: 15.02.2017
(73) Proprietor: Dow Quimica Mexicana S.A.de C.V., 11000 Mexico Distrito Federal (MX)
(72) Inventor: LERÍN CASTELLANOS, José Ramon, 72575 Puebla, Puebla (MX); HERNÁNDEZ GARCIA, Juan Manuel, 90407 Apizaco, Tlaxcala (MX)
(74) Representative: Beck Greener LLP
(86) International application number: PCT/MX2014/000213
(87) International publication number: WO 2015/156657

(56) References cited:
- EP-A1- 2 620 459
- WO-A1-96/34904
- WO-A1-97/19971
- WO-A1-97/21750
- WO-A1-98/16571
- WO-A1-2004/074343
- WO-A1-2004/099281
- WO-A1-2009/015149
- WO-A1-2012/177825
- WO-A1-2017/006357
- WO-A2-02/055576
- US-A- 5 591 820
- US-A- 6 130 268
- US-A1- 2009 017 311
- US-A1- 2017 327 620
- US-B1- 6 319 559

## Description

### FIELD OF THE INVENTION

The present invention relates to methods of making 2K polyurethane adhesive foams based on methylene diphenyl diisocyanate.

### INTRODUCTION

Two-component (2K) polyurethane (PU) adhesives are used in industry in various applications. Such adhesives are useful for bonding parts that are compatible with polyurethanes. Such adhesives are known, for example, for bonding fabric to polyurethane foam to be used for, e.g., seating such as automotive seating.

The two parts of the 2K adhesive generally comprise a prepolymer composition (Component A) and a catalyst composition (Component B). When one of the components (e.g., Component A) is very viscous, heating may be utilized during the application process to lower viscosity and thereby facilitate application. Component A generally comprises an isocyanate composition, e.g., an isocyanate-based prepolymer. Some commonly used isocyanate compositions are based on toluene diisocyanate (TDI). TDI-based prepolymers are expensive and are associated with inhalation health risks.

Component B generally comprises active hydroxy compounds (such as water and/or polyols) that lead to polymerization of the prepolymer in Component A. Component B may contain one or more additives for various purposes, such as an amine to reduce cure time, or a dye for visibility during application.

In some commercial processes, such as in the manufacture of automobile seating, component A (which is generally viscous at room temperature) is heated to, e.g., 90° C to reduce the viscosity. Compositions A and B are then applied with a spray gun that sprays both compositions onto a seat assembly of polyurethane foam. Fabric is then placed over the adhesive, thereby adhering the fabric to the foam seat assembly.

In commercial processes such as assembly lines, it is generally important that a 2K PU adhesive cure rapidly. For example, a part to which a 2K PU adhesive is applied often needs to be sufficiently cured so that that part can proceed to the next step of assembly without being compromised. Also, slow curing might limit the productivity of the assembly line.

U.S. Patent No. 6,319,559 discloses a method and system for applying an adhesive agent to a covering material in the process of bonding the covering material to a foam cushion member to produce a bonded unit forming a seat. As a base material of the adhesive agent, only a primary component material and secondary curing agent are used, without any organic solvent added in the primary component material. Heat of a predetermined temperature is continuously applied to the primary component material by heating elements so as to retain its lowered viscosity through a whole fluid passage from a storage point to a spray gun, so that the heated primary component material in a fluid state may be injected from the spray gun, while being mixed with the curing agent in the air at the same time, thereby applying a properly atomized state of the mixture, as an adhesive agent, to the covering material.

There remains a need for 2K PU adhesives that cure rapidly enough for commercial processes.

There remains a need for 2K PU adhesives that comprise materials that present lower health risks than TDI-based adhesives.

There remains a need for 2K PU adhesives that have lower viscosity than TDI-based adhesives, and/or that can be applied at lower temperatures.

### SUMMARY OF THE INVENTION

It has been surprisingly found that a 2K PU adhesive based on methylene diphenyl diisocyanate (MDI) offers unexpected advantages. The MDI-based 2K PU adhesives made by the method of the invention provide improved handling and reduced inhalation health hazards due to lower isocyanate monomer vapor. They provide lower viscosity than known TDI-based adhesives, good adhesion, and fast cure time.

The present invention provides a method of making a polyurethane composition comprising:
obtaining a composition A comprising a polyurethane prepolymer having viscosity less than 7500 cPs (7.5 Pa·s) at 25° C by ASTM D455, and prepared by a process that includes combining:
   15% to 50% by weight of methylene diphenyl diisocyanate and
   45% to 80% by weight of a polyether polyol having at least 70% primary ethylene oxide content;
obtaining a composition B comprising:
   at least 50% by weight reactive hydroxy component;
   up to 27% by weight cross-linking agent;
   5% to 15% by weight catalyst; and
   up to 15% by weight surfactant;
lowering the viscosity of composition A by heating composition A to a temperature in the range of 65° to 85° C;
combining composition A and composition B; and
applying the combination of composition A and composition B to a surface by spraying.

### DETAILED DESCRIPTION OF THE INVENTION

The present invention relates to methods of making 2K polyurethanes. The two parts are referred to herein as composition A (polyurethane prepolymer) and composition B (hardener).

Composition A of the 2K polyurethane according to the present invention is a polyurethane prepolymer that is prepared by combining methylene diisocyanate (MDI) with a polyol.

Any MDI can be used in the preparation of composition A, preferably a pure MDI. By pure MDI is meant a composition that comprises at least 90% by weight 4,4-methylene diphenyl diisocyanate, more preferably at least 95%, more preferably at least 98%. A pure MDI preferably comprises less than 5% by weight of other components, such as 2,4-methylene diphenyl diisocyanate, more preferably less than 3%, more preferably less than 2%. Pure MDIs are commercially available, and include Isonate^{™} 124M, and Isonate^{™} 125M, both from The Dow Chemical Company.

Composition A comprises at least 15% MDI by weight of composition A, more preferably at least 20%, 25%, 30% or 35%. Composition A comprises up to 50%, more preferably up to 45% or 40%. Some preferred amounts of MDI include 35%, 36%, 37%, 38%, 39% and 40%.

A polyether polyol is used in the preparation of composition A. Preferred polyols are reaction mixtures of an organic oxide (e.g., ethylene oxide, propylene oxide, or a mixture) with an initiator compound (e.g., water, ethylene glycol, glycerin). If the reaction is carried with ethylene oxide, or if the propylene oxide based polyol is capped with additional ethylene oxide, primary hydroxyl groups result. On the other hand, uncapped propylene oxide results in secondary hydroxyl groups. Primary hydroxyl groups are preferred since they tend to react faster than secondary hydroxyl groups. The ethylene oxide level of a polyol, e.g., total or primary hydroxyl content, can be measured by NMR, e.g., by ASTM 4273-88). Polyols with high primary ethylene oxide levels of at least 70% are used, e.g., preferably greater than 75%, 80%, 90%, 95%, or 100%. Some suitable ethylene oxide levels include 75%, 77% and 80%.

Some suitable commercially available polyether polyols include the Voranol^{™} line of polyether polyols available from The Dow Chemical Company, including Voranol^{™} 4240, Voranol^{™} 4701, Voranol^{™} 4703, Voranol^{™} 5815, Voranol^{™} CP 1421, and Voranol^{™} CP 3131.

Composition A comprises at least 45% polyether polyol by weight of composition A, more preferably at least 50%, 55%, or 60% polyether polyol. Composition A comprises up to 80%, more preferably up to 75%, 70% or 65% polyether polyol. Some preferred amounts of polyether polyol include 60%, 61%, 62%, 63%, 64% and 65%.

Composition A may comprise one or more components in addition to the MDI and the polyol. Such other components preferably comprise less than 5% by weight of composition A, more preferably less than 2% or 1%.

Composition A may also comprise one or more stabilizing agents, to prevent, for example, gelation. A preferred stabilizing agent is an acidic compound, such as benzoyl chloride and/or phosphoric acid. Preferred amounts are less than 500 parts per thousand by weight, 400, 300, 200 or 100 parts per thousand.

Composition A comprises a reaction product of MDI and polyol. The reaction product can be made in any way by one of ordinary skill in the art. In a preferred method, the polyol is added to a blender. After the blender is switched on, the isocyanate is added slowly and the reaction is permitted to run to completion.

In the preparation of composition A, an excess of NCO is preferably used in order to assure an adequate NCO level in composition A, because NCO must be present in composition A in order to react with the hardener. Composition A preferably has an NCO content of at least 6, preferably at least 7, or 7.5. Composition A preferably has an NCO content up to 14, preferably up to 13, or 12.5. NCO content can be measured using ASTM D 5155, 1.1.1 Test method A.

The viscosity of composition A can be measured using standard test ASTM D 455. The viscosity of composition A at 25° C is preferably up to 7500 cPs (7.5 Pa·s), more preferably up to 7100 cPs (7.1 Pa·s). The viscosity of composition A at 25° C is preferably greater than 3500 cPs (3.5 Pa·s), more preferably greater than 3800 cPs (3.8 Pa·s).

Compositions suitable for use in the present invention as composition A are also commercially available. A preferred commercially available composition A is Specflex^{™} NE 414 adhesive, available from The Dow Chemical Company.

Composition B of the 2K polyurethane according to the present invention is any composition that is capable of curing composition A. As a general matter, composition B will comprise hydroxy groups capable of reacting with a component of composition A, thereby causing the prepolymer therein to polymerize into polyurethane; and may comprise other components as well.

Any component with a reactive hydroxy group is capable of serving as the reactive hydroxy component of composition B. Preferably, the reactive hydroxy group comprises water or a polyol, preferably water.

Composition B comprises at least 50% reactive hydroxy component by weight of composition B, preferably at least 55%, or 61% reactive hydroxy component, preferably water. Composition B preferably comprises up to 75%, more preferably up to 70% or 66% reactive hydroxy component, preferably water. Some preferred amounts of reactive hydroxy component include 62%, 63%, 64%, and 65%. Water content can be calculated based on components used in preparation. Alternatively, water content of a composition can be measured using standard test method ASTM E 203 or an equivalent method.

Composition B can also be provided without water, or with reduced water. This can save on, e.g., shipping costs and storage space. Such reduced-water compositions B are preferably brought to higher water content either by mixing before use, or in situ (e.g., using a water inlet in spray equipment).

Composition B also preferably comprises at least one cross-linking agent capable of reacting with isocyanate. Some suitable products include triethanolamine, diethanolamine, glycerin, and combinations thereof. When used, composition B preferably comprises at least 9% cross-linking agent by weight of composition B, more preferably at least 12%, or at least 15%. Composition B comprises up to 27% cross-linking agent by weight of composition B, preferably up to 24%, or 21%. Some preferred amounts include 16%, 17%, 18%, 19% and 20%.

Composition B also comprises one or more catalysts to speed up the polymerization reaction. Any catalyst, preferably an amine catalyst, capable of catalyzing polymerization of Composition A is suitable. Some preferred catalysts include Polycat 77, Dabco 33 LV, Dabco XDM and Dabco SA-1, Dabco 8154, Niax A-1 and Jeffcat DMDEE. More preferred are Niax A-1 (Momentive: 70% bis(2-dimethylaminoethyl)ether and 30% dipropylene glycol) and Jeffcat DMDEE (Hunstman: 2,2-dimorpholinodiethylether). Composition B comprises up to 15% catalyst by weight of composition B, preferably up to 13%, or 11% catalyst. Composition B comprises at least 5% catalyst by weight of composition B, preferably at least 6% or 7% catalyst. Some preferred amounts include 7%, 8%, 9%, and 10% catalyst.

Composition B also preferably comprises at least one surfactant component. The surfactant preferably facilitates the evolving polyurethane foam cells to develop sufficient strength to maintain their structure without collapse or deformation. The surfactant preferably also renders compositions A and B more compatible, facilitating more complete reaction or "cure" in the finished foam. A preferred surfactant comprises a silicone copolymer. Suitable silicone copolymers are commercially available from Momentive under the Niax line and include Niax^{∗} silicone L-6884, Niax^{∗} silicone L-6887; Niax^{∗} silicone L-6889; Niax^{∗} silicone L-6900, Niax^{∗} silicone L-6915LV; Niax^{∗} silicone L-6988.

The amount of surfactant is preferably at least 4% by weight of composition B, more preferably at least 6% or 8%. The amount is up to 15% by weight, preferably up to 13% or 10%.

The viscosity of composition B (ASTM D 455) at 25° C is preferably up to 50 cPs (50 mPa·s), more preferably up to 35 cPs (35 mPa·s). The viscosity of composition B at 25° C is preferably greater than 14 cPs (14 mPa·s), more preferably greater than 19 cPs (19 mPa·s).

Compositions suitable for use in the present invention as composition B are also commercially available. A preferred commercially available composition B is Specflex^{™} NK 925 hardener, available from The Dow Chemical Company.

It may also be convenient to add a colorant, as this can facilitate inspections and observations of whether the adhesive is properly applied. The colorant can be in either or both of components A and B. For processing reasons, it is generally preferred that a colorant, when used, is used in composition B, preferably only in composition B. Reactive colorants are preferred. A number of suitable colorants are commercially available, including Reactint, e.g., Reactint Black 2151, from Milliken.

The 2K PU adhesive is applied by spraying. When applying by spraying, composition A is heated in order to lower its viscosity to one suitable for spraying using whatever equipment has been selected. Because of the lower viscosity of the inventive MDI-based compositions, it is possible to use lower temperatures than needed for TDI-based systems. This leads to improved worker safety and less energy use. The temperature to which composition A is heated is up to 85° C, such as 80° C, or 75° C. The temperature to which composition A is heated is greater than 65° C. A preferred temperature is 70° C or 80° C.

Compositions A and B can be combined in any proportion suitable for a particular use. The rate at which compositions A and B are sprayed depends on the specific compositions used, the manufacturing system, and the manufacturing conditions. As a general matter, composition A is sprayed from at a rate of 6-10 g/sec, preferably 8 g/sec. Composition B is generally sprayed at a rate of 5-9 g/sec, preferably 7 g/sec. Conveniently, one can begin spraying compositions A and B at 8 and 7 g/sec (respectively), and adjust the flow rates as needed, e.g., by adjusting air flow. In a preferred embodiment, composition A is sprayed at a rate of 8 g/sec, and composition B is sprayed at a rate of 7 g/sec.

Referring to mixing proportions of A and B in terms of spray rates (as above) is a matter of convenience. It will be understood that the above spray rates are also equivalent to mass proportions. For example, the preferred embodiment mentioned above is equivalent to combining compositions A and B in a weight ratio of 8 to 7.

Polyurethane foams according to the present invention are preferably dense enough to provide good coverage and other properties, but not so dense as to adversely affect the final product (e.g., sponge or automobile seat) being manufactured. The density of the inventive polyurethane foam, when applied to a surface and cured, is preferably at least 35 kg/m³, more preferably at least 40 kg/m³, or 45 kg/m³. The density is preferably up to 65 kg/m³, more preferably up to 60 kg/m³, or 55 kg/m³.

Gel time can be defined as the amount of time after compositions A and B are combined (e.g., in a vessel, or discharged from a mixing head) and the point at which long strings of material can be pulled away after inserting a steel needle or tongue depressor 1 to 2 cm into the foam. The gel time of the inventive polyurethane foams is preferably long enough to allow sufficient handling time, and/or short enough to permit proceeding to the next manufacturing step (or storage) without slowing down production and/or compromising product quality.

Any gel time suitable for a particular manufacturing process can be used according to the present invention. Gel time is preferably at least 10 seconds, more preferably at least 12 or 14 seconds. Gel time is preferably less than 26 seconds, more preferably less than 23 or 20 seconds.

Cream time is an indication of how quickly the polymerization reaction begins once the compositions are combined. Cream time can be defined as the amount of time after compositions A and B are combined (e.g., in a vessel, or discharged from a mixing head) and the beginning of the foam rise. At the cream time, the surface of the adhesive will generally change color, usually turning lighter as a result of saturation of the adhesive with evolving gas. Reaction times (including cream time, rise time, and tack-free time) can be measured in a vessel (referred to as hand mixing) by the following procedure: mix 20 g composition A and 10 g composition B at 25° C in a vessel equipped with a stir bar operating at 3500 rpm. This procedure can also be used for rise time and tack-free time (see below).

Any cream time suitable for a particular manufacturing process can be used according to the present invention. Cream time by hand mixing is preferably at least 10 seconds, more preferably at least 12 seconds or 14 seconds. Cream time by hand-mixing is preferably up to 26 seconds, more preferably up to 23 seconds or 20 seconds. Some preferred cream times include 15, 16, 17, 18, or 19 seconds.

After compositions A and B are combined, reactive hydroxy groups react with NCO leading to polymerization and releasing carbon dioxide in the process. Release of gas leads to foaming and rising of the mixture. Rise time can be defined as the amount of time after compositions A and B are combined (e.g., in a vessel, or discharged from a mixing head) until the mixture stops rising.

Any rise time suitable for a particular manufacturing process can be used according to the present invention. Rise time by hand mixing is preferably at least 21 seconds, more preferably at least 23 seconds of 25 seconds. Rise time by hand mixing is preferably up to 35 seconds, more preferably up to 33 seconds or 31 seconds. Some preferred rise times include 26, 27, 28, 29, and 30 seconds.

When the rise time is reached, the foam has generally not yet set and is still tacky, e.g., tacky to the touch of a hand. The tack-free time may be defined as the amount of time after compositions A and B are combined (e.g., in a vessel, or discharged from a mixing head) until the foam is no longer tacky to the touch. Once the tack-free time is reached, it is no longer practical to adhere, e.g., fabric to a seat or liner to a sponge.

Any tack-free time suitable for a particular manufacturing process can be used according to the present invention. Tack-free time by hand mixing is preferably at least 26 seconds, more preferably 28 seconds, or 30 seconds. Tack-free time by hand mixing is preferably up to 45 seconds, more preferably up to 40 seconds, or 37 seconds. Some preferred tack-free times include 31, 32, 33, 34, 35, and 36 seconds.

### EXAMPLES

Some embodiments of the invention will now be described in the following Examples and Comparative Examples, wherein all parts and percentages are by weight unless otherwise specified.

Nine different polyurethane foams are prepared, designated P1-P9, using compositions A and B as shown in Table 1. P1 is prepared by combining A1 and B1, etc. P7-9 use composition A according to claim 1, and P8-9 use compositions B according to claim 1. Thus, P8 and P9 are polyurethanes prepared in accordance with the invention by combining a composition A and a composition B according to claim 1.

**Table 1**

| Compositions A | | | | | | | | | |
|---|---|---|---|---|---|---|---|---|---|
| | A1 | A2 | A3 | A4 | A5 | A6 | A7 | A8 | A9 |
| Hypol JM 5002 | | 60 | 60 | 60 | 60 | 60 | | | |
| Hypol JM 5005 | | 40 | 40 | 40 | 40 | 40 | | | |
| Hypol 2002 | 100 | | | | | | | | |
| Specflex NE 414 | | | | | | | 100 | 100 | 100 |

| Compositions B | | | | | | | | | |
|---|---|---|---|---|---|---|---|---|---|
| | B1 | B2 | B3 | B4 | B5 | B6 | B7 | B8 | B9 |
| Specflex NK 925 | | | | | | | | | 100 |
| triethanolamine | | | | | | 20 | 20 | 18.69 | |
| Niax Silicone L 6900 | 0.2 | 0.4 | | 0.4 | | 20 | 10 | 9.34 | |
| water | 92 | 92 | 88 | 86 | 84 | 60 | 70 | 65.42 | |
| Niax A-1 | 1.5 | 1.5 | 5 | 2 | 1 | | | | |
| Dabco 8154 | 2.5 | 3.5 | 2 | 5 | | | | | |
| Jeffcat DMDEE | 3.5 | 1.5 | 5 | 5 | 5 | | | 6.55 | |
| Dabco 33LV | | | | 2 | | | | | |
| Polycat 46 | | | | | 10 | | | | |
| Reactint Black | | | | | | | | | |

| Results | | | | | | | | | |
|---|---|---|---|---|---|---|---|---|---|
| | P1 | P2 | P3 | P4 | P5 | P6 | P7 | P8 | P9 |
| Cream time, sec | 13 | 8 | | | | | | 19 | 17 |
| Rise time, sec | 95 | 61 | | | | | | 34 | 28 |
| Tack-free time, sec | 100 | 80 | | | | | | 36 | 34 |

HYPOL JM 5002 is an MDI-based prepolymer; 8.5 to 9.7% NCO; viscosity at 25° C: 3200 cps (3.2 Pa·s). HYPOL JM 5005 is an MDI-based prepolymer; 4.5 to 5.7% NCO; viscosity at 25C: 8000 to 20000 mPa-s. HYPOL 2002 is a TDI-based prepolymer; 6.30 to 7.14% NCO; viscosity at 25C: 16000 to 21000 mPa-s. These products are available from The Dow Chemical Company.

Specflex NE 414 is an MDI-based prepolymer; 9% NCO; viscosity at 25C: 5640 mPa-s, according to Composition A of the method of the present invention. Specflex NK 925 is a polyurethane hardener comprising water, cross-linking agent, catalyst and surfactant according to Composition B of the method of the present invention. Both products are available from The Dow Chemical Company.

Dabco 8154 is a blocked tertiary amine catalyst; vis at 25C: 160 mPa-s. Dabco 33LV is 33% triethylenediamine and 67% dipropylene glycol. Polycat 46 is a metal-based trimerization catalyst, potassium acetate in ethylene glycol. These products are available from Air Products.

Jeffcat DMDEE, 2,2-dimorpholinodiethylether, a high boiling amine catalyst for blowing or rapid cure in moisture-cured systems, is available from Hunstman.

The above adhesives are sprayed onto a polyurethane foam (toluene diisocyanate having density 40-45 kg/m³) at a rate of 8 g/sec (composition A) and 7 g/sec (composition B). Automotive seat cover fabric is immediately placed over the adhesive and pressure is applied for about 30 seconds (26 to 32 seconds). The foam is then placed in a vertical position and a 5 pound (2.27 kg) weight is attached to the upper edge of the fabric. The weight is attached within 60 seconds from when the adhesive is applied. After 30 seconds the distance that the fabric has peeled is measured. The peel test is passed if the fabric has peeled 15 millimeters or less. The peel test is failed if the fabric has peeled more than 15 millimeters.

Foam P9 passes the peel test.

## Claims

1. A method of making a polyurethane composition comprising:
obtaining a composition A comprising a polyurethane prepolymer having viscosity less than 7500 cPs (7.5 Pa·s) at 25° C by ASTM D455, and prepared by a process that includes combining:
15% to 50% by weight of methylene diphenyl diisocyanate and
45% to 80% by weight of a polyether polyol having at least 70% primary ethylene oxide content;
obtaining a composition B comprising:
at least 50% by weight reactive hydroxy component;
up to 27% by weight cross-linking agent;
5% to 15% by weight catalyst; and
up to 15% by weight surfactant;
lowering the viscosity of composition A by heating composition A to a temperature in the range of 65° to 85° C;
combining composition A and composition B; and
applying the combination of composition A and composition B to a surface by spraying.

2. The method of claim 1 wherein composition A has an NCO content of 6 to 14 by ASTM D 5155.

3. The method of claim 1 or claim 2 wherein composition A has a viscosity at 25° C of 3500 to 7500 cPs (3.5 to 7.5 Pa·s) by ASTM D 455.

4. The method of any one of the preceding claims, wherein the weight ratio of composition A to composition B is in the range of 6:9 to 10:5.

5. The method of any one of the preceding claims, wherein the combining comprises spraying composition A and spraying composition B simultaneously.

## Patentansprüche

1. Ein Verfahren zum Herstellen einer Polyurethanzusammensetzung, das Folgendes beinhaltet:
Erhalten einer Zusammensetzung A, die ein Polyurethanpräpolymer mit einer Viskosität von weniger als 7500 cPs (7,5 Pa·s) bei 25 °C nach ASTM D455 beinhaltet und mittels eines Vorgangs zubereitet wird, der das Kombinieren von Folgendem umfasst:
zu 15 Gew.-% bis 50 Gew.-% Methylendiphenyldiisocyanat und
zu 45 Gew.-% bis 80 Gew.-% ein Polyetherpolyol mit einem Gehalt an primärem
Ethylenoxid von mindestens 70 %;
Erhalten einer Zusammensetzung B, die Folgendes beinhaltet:
zu mindestens 50 Gew.-% eine reaktionsfähige Hydroxykomponente;
bis zu 27 Gew.-% ein Vernetzungsmittel;
zu 5 Gew.-% bis 15 Gew.-% ein Katalysator; und
bis zu 15 Gew.-% ein Tensid;
Senken der Viskosität von Zusammensetzung A durch Erwärmen von Zusammensetzung A auf eine Temperatur in dem Bereich von 65 °C bis 85 °C;
Kombinieren von Zusammensetzung A und Zusammensetzung B; und
Auftragen der Kombination aus Zusammensetzung A und Zusammensetzung B auf eine Oberfläche durch Sprühen.

2. Verfahren gemäß Anspruch 1, wobei Zusammensetzung A einen NCO-Gehalt von 6 bis 14 nach ASTM D 5155 aufweist.

3. Verfahren gemäß Anspruch 1 oder Anspruch 2, wobei Zusammensetzung A eine Viskosität bei 25 °C von 3500 bis 7500 cPs (3,5 bis 7,5 Pa·s) nach ASTM D 455 aufweist.

4. Verfahren gemäß einem der vorhergehenden Ansprüche, wobei das Gewichtsverhältnis von Zusammensetzung A zu Zusammensetzung B in dem Bereich von 6 : 9 bis 10 : 5 liegt.

5. Verfahren gemäß einem der vorhergehenden Ansprüche, wobei das Kombinieren das Sprühen von Zusammensetzung A und das Sprühen von Zusammensetzung B gleichzeitig beinhaltet.

## Revendications

1. Un procédé de fabrication d'une composition de polyuréthane comprenant :
le fait d'obtenir une composition A comprenant un prépolymère de polyuréthane ayant une viscosité de moins de 7 500 cPs (7,5 Pa·s) à 25 °C selon l'ASTM D455, et préparée par un processus qui inclut le fait de combiner :
de 15 % à 50 % en poids de diisocyanate de méthylènediphényle et
de 45 % à 80 % en poids d'un polyéther polyol ayant une teneur en oxyde
d'éthylène primaire d'au moins 70 % ;
le fait d'obtenir une composition B comprenant :
au moins 50 % en poids de composant hydroxy réactif ;
jusqu'à 27 % en poids d'agent de réticulation ;
de 5 % à 15 % en poids de catalyseur ; et
jusqu'à 15 % en poids de tensioactif ;
le fait d'abaisser la viscosité de la composition A en chauffant la composition A jusqu'à une température comprise dans la gamme allant de 65° à 85 °C ;
le fait de combiner la composition A et la composition B ; et
le fait d'appliquer la combinaison de la composition A et de la composition B sur une surface en la pulvérisant.

2. Le procédé de la revendication 1 dans lequel la composition A a une teneur en NCO allant de 6 à 14 selon l'ASTM D 5155.

3. Le procédé de la revendication 1 ou de la revendication 2 dans lequel la composition A a une viscosité à 25 °C de 3 500 à 7 500 cPs (3,5 à 7,5 Pa·s) selon l'ASTM D 455.

4. Le procédé de n'importe laquelle des revendications précédentes, dans lequel le rapport en poids de la composition A à la composition B est compris dans la gamme allant de 6/9 à 10/5.

5. Le procédé de n'importe laquelle des revendications précédentes, dans lequel le fait de combiner comprend le fait de pulvériser la composition A et le fait de pulvériser la composition B simultanément.
